# EUROPÄISCHE PATENTSCHRIFT

(11) **EP 2 104 779 B1**
(45) Veröffentlichungstag und Bekanntmachung des Hinweises auf die Patenterteilung: **24.10.2018**
(21) Anmeldenummer: 07821816.1
(22) Anmeldetag: 25.10.2007
(51) Int. Cl.: F01P 5/04, F04D 27/02, F04D 29/58, G05D 23/19

(54) **STEUERGERÄT INSBESONDERE FÜR EIN KÜHLLUFTGEBLÄSE EINES VERBRENNUNGSMOTORS SOWIE KÜHLSYSTEM FÜR EINEN VERBRENNUNGSMOTOR**
CONTROL UNIT, IN PARTICULAR FOR A COOLING-AIR FAN OF AN INTERNAL COMBUSTION ENGINE, AND COOLING SYSTEM FOR AN INTERNAL COMBUSTION ENGINE
MODULE DE COMMANDE, NOTAMMENT POUR UNE SOUFFLANTE D'AIR FRAIS D'UN MOTEUR À COMBUSTION INTERNE AINSI QUE SYSTÈME DE REFROIDISSEMENT POUR UN MOTEUR À COMBUSTION INTERNE

(30) Priorität: 21.12.2006 DE 102006060624
(43) Veröffentlichungstag der Anmeldung: 30.09.2009
(73) Patentinhaber: Robert Bosch GmbH, 70442 Stuttgart (DE)
(72) Erfinder: FLESKES, Werner, 77815 Buehl-Altschweier (DE); BURKART, Manfred, 76473 Iffezheim (DE)
(86) Internationale Anmeldenummer: PCT/EP2007/061453
(87) Internationale Veröffentlichungsnummer: WO 2008/077665

(56) Entgegenhaltungen:
- EP-A- 0 398 011
- EP-A- 1 111 491
- DE-A1- 10 321 732
- DE-A1- 19 929 194
- US-A1- 2002 166 519

## Beschreibung

Die vorliegende Erfindung geht aus von einem Steuergerät insbesondere für ein Kühlluftgebläse nach den Merkmalen des Oberbegriffs des Anspruchs 1.

Aus der DE 103 21 732 A1 der Anmelderin ist eine Kühlluftgebläseanordnung für einen Verbrennungsmotor eines Kraftfahrzeuges dargestellt und beschrieben, bei der zur Motorkühlung zwei Lüfter vorgesehen sind, die durch ein gemeinsames elektronisches Steuergerät angesteuert werden. Zur Kühlung des elektronischen Steuergerätes ist ein zusätzlicher Luftauslass so angebracht, dass auch bei Ausfall eines Lüfters das elektronische Steuergerät durch den Luftstrom des anderen Lüfters gekühlt wird.

Aus der EP 0 398 011 A1 ist ein Steuergerät-Kühlsystem für eine Brennkraftmaschine mit einem Bimetallschalter zur Regelung eines Pumpenmotors bekannt.

Aus der EP 1 111 491 A2 ist eine Motorsteuergerät, welches seine eigene Temperatur überwacht, bekannt.

Aus der DE 199 29 194 A1 ist ein elektrischer Anschlusskasten zur Verwendung in einem Kraftfahrzeug, bekannt.

Weiterhin ist bekannt, dass an den Steuergeräten für Kühlluftgebläse von Verbrennungsmotoren permanent eine Batteriespannung anliegt. Diese sogenannte Dauerplus- Klemme (auch: B+ oder Klemme 30) stellt sicher, dass bei eingebauter und angeklemmter Batterie auch dann elektrische Leistung verfügbar ist, wenn die Zündung ausgeschaltet und der Zündschlüssel abgezogen ist. Durch die Dauerplus- Klemme wird sichergestellt, dass auch nach dem Abstellen des Kraftfahrzeuges ein Lüfter- bzw. Kühlluftgebläsenachlauf erfolgt, der die Kühlung des Verbrennungsmotors auch bei Stillstand gewährleistet.
Unabhängig davon, ob ein Kühlluftgebläse mit einem oder mehreren Lüftern ausgestattet ist, kann es im Fehlerfall zu Überhitzungen des Steuergerätes kommen. So kann das Eindringen von Feuchtigkeit in das Steuergerät zur Bildung von Salzbrücken zwischen unterschiedlichen Potenzialen führen. Über diese Salzbrücken kann es zu einem Kurzschlussstrom kommen, der zur Überhitzung dieses Bereiches und damit zur Überhitzung bzw. sogar zum Brand des Steuergeräts insgesamt führen kann.
Das zuvor geschilderte Problem kann nicht nur bei dem Steuergerät für das Kühlluftgebläse, sondern auch generell bei Steuergeräten im Kraftfahrzeug auftreten, bei denen -wie zuvor geschildert- permanent eine Batterie- bzw. Versorgungsspannung anliegt, wie beispielsweise bei ABS- oder Motorsteuergeräten.
Aufgabe der Erfindung ist es daher, sicherzustellen, dass in den exemplarisch aufgeführten Fehlerfällen das Steuergerät sicher vor Überhitzung geschützt wird.
Die Lösung der Aufgabe erfolgt durch die im Anspruch 1 angegebenen Merkmale.
Durch die Integration einer Temperatur- Sicherung, in der im Steuergerät vorgesehenen Stromzuführung wird sichergestellt, dass ab einer bestimmten Temperatur im Steuergerät letzteres spannungsfrei geschaltet wird und damit die Stromzufuhr dauerhaft unterbrochen ist.

Die Temperatur- Sicherung ist auf vorteilhafte Art und Weise als Schmelzdraht, Zinnbrücke oder Bimetallelement ausgebildet.
Die Temperatur-Sicherung ist auf einfache Art und Weise mittels Schweißen, Löten oder einer Schneid-Klemmverbindung an den Leiterelementen für die Stromführung des Steuergerätes befestigt.
Ein Ausführungsbeispiel der Erfindung ist in der nachfolgenden Beschreibung und Zeichnung näher erläutert.
Es zeigen:
Figur 1 eine schematische Darstellung eines Kühlmittelkreislaufs eines Verbrennungsmotors und
Figur 2 eine perspektivische Teilansicht auf das Gehäuseunterteil eines Steuergeräts im Bereich der Stromzuführung für die Leiterplatine.

### Beschreibung der Ausführungsbeispiele

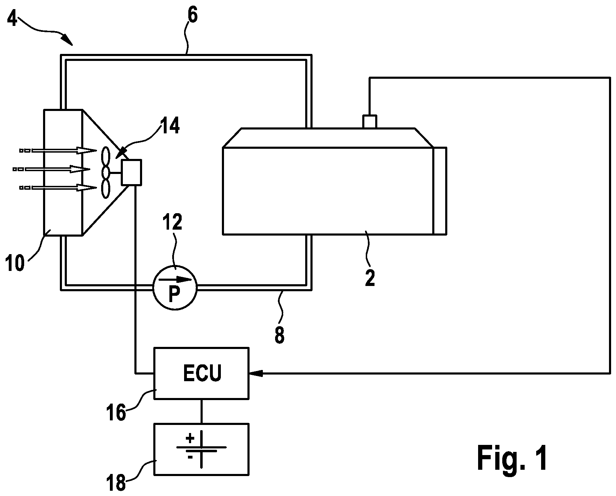

In Figur 1 ist schematisch der Kühlmittelkreislauf für einen Verbrennungsmotor 2 dargestellt, der aus einem im Motor- und Zylinderkopf des Verbrennungsmotors 2 integrierten kleinen Kühlmittelkreislauf (nicht dargestellt) und einem großen Kühlmittelkreislauf 4 besteht. Der große Kühlmittelkreislauf 4 besteht aus einem Vorlauf 6 und einem Rücklauf 8, wobei zwischen Vor- und Rücklauf 6, 8 ein Wärmeübertrager (Kühler) 10 angeordnet ist. Im Rücklauf 8 des großen Kühlmittelkreislaufes 4 ist weiterhin eine Kühlmittelpumpe 12 zur Erzeugung einer Kühlmittel- Zwangsumlaufströmung vorgesehen.

Um einen effektiveren Wärmeübergang durch erzwungene Konvektion zu erreichen, ist am Wärmeübertrager 10 ein Kühlluftgebläse -im folgenden als Lüfter 14 bezeichnetangeordnet. Der Lüfter 14 wird dabei über ein Steuergerät 16 angesteuert, das über eine Fahrzeugbatterie 18 -auch im ausgeschalteten Zustand (Zündung aus)- mit Bordspannung versorgt ist. Im vorliegenden Ausführungsbeispiel ist das Steuergerät 16 ausschließlich zur Ansteuerung des Lüfters 14 vorgesehen; zur Kühlung des Steuergeräts 16 ist letzteres direkt an der Lüfterzarge -vorzugsweise im Luftstrom des Lüfters 14- befestigt.

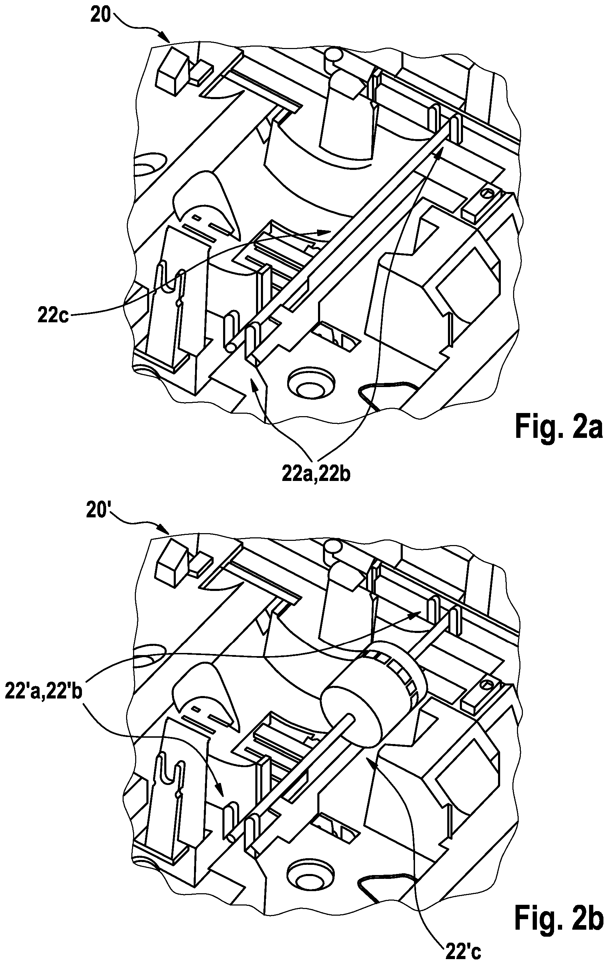

In Figur 2a ist perspektivisch das Gehäuseunterteil 20 des Steuergeräts 16 dargestellt. Zu erkennen sind Leiterelemente 22a, 22b (Plus- oder Minuspfad) über die eine nicht näher dargestellte Leiterplatine mit Strom versorgt wird. Zwischen den Leiterelementen 22a, 22b ist eine Temperatur-Sicherung 22c angeordnet, die im ersten Ausführungsbeispiel gemäß Figur 2a als Zinnbrücke oder Schmelzdraht 22c ausgebildet ist. Die beiden Enden der Temperatursicherung 22c können dabei mittels Schweißen, Löten oder einer Schneid-Klemm- Verbindung an den beiden Leiterelementen 22a, 22b befestigt werden. Wenn im Fehlerfall die Temperatur im Steuergerät 16 einen kritischen Wert übersteigt, schmilzt die Zinnbrücke oder der Schmelzdraht 22c und die Stromzufuhr zum Steuergerät 16 wird dauerhaft unterbrochen.

Ein zweites Ausführungsbeispiel ist in Figur 2b dargestellt, wobei in diesem Fall die Temperatur- Sicherung als BimetallElement 22'c ausgebildet ist. Analog zum ersten Ausführungsbeispiel wird bei Überschreiten einer kritischen Temperatur im Steuergerät 16 über das Bimetall- Element 22'c die Stromzufuhr zum Steuergerät 16 unterbrochen; bei Erreichen der Auslösetemperatur wird dabei durch Umspringen einer Bimetallscheibe der elektrische Kontakt sprunghaft schnell getrennt.

Wie bereits in der Beschreibungseinleitung ausgeführt, ist die Erfindung nicht auf die beiden Ausführungsbeispiele eines Steuergeräts für ein Kühlluftgebläse eines Verbrennungsmotors eingeschränkt, sondern universell bei im Kraftfahrzeug verwendeten Steuergeräten einsetzbar, bei denen permanent eine Batterie- bzw. Versorgungsspannung anliegt.

## Patentansprüche

1. Steuergerät (16), insbesondere für ein Kühlluftgebläse (14), eines Verbrennungsmotors (2), mit einem Gehäuse, in dem eine Platine zur Aufnahme elektronischer Bauelemente sowie Leiterelemente (22a, 22b; 22'a, 22'b) zur Stromzufuhr angeordnet sind, wobei als Überhitzungsschutz für das Steuergerät (16) zwischen den Leiterelementen (22a; 22b; 22'a, 22'b) eine Temperatur-Sicherung (22c, 22'c) angeordnet ist, **dadurch gekennzeichnet, dass** die Temperatur- Sicherung als Zinnbrücke oder Schmelzdraht (22c) ausgebildet ist, die bei Erreichen einer Temperatur mit kritischem Wert die Stromzufuhr zum Steuergerät (16) unterbricht und dass die Temperatur- Sicherung (22c, 22'c) mittels Schweißen, Löten oder als Schneid-Klemmverbindung an den Leiterelementen (22a,22b; 22'a,22'b) befestigt ist.

## Claims

1. Control unit (16), in particular for a cooling air fan (14), of an internal combustion engine (2), having a housing in which a circuit board for holding electronic components and conductor elements (22a, 22b; 22'a, 22'b) for the current supply are arranged, wherein a temperature protection means (22c, 22'c) is arranged between the conductor elements (22a, 22b; 22'a, 22'b), as a protection against overheating for the control unit (16), **characterized in that** the temperature protection means is embodied as a solder bridge or fuse wire (22c) which, when a temperature with a critical value is reached, interrupts the current supply to the control unit (16), and **in that** the temperature protection means (22c, 22'c) is attached to the conductor elements (22a, 22b; 22'a, 22'b) by means of welding, soldering or as an insulation displacement connection.

## Revendications

1. Appareil de commande (16), en particulier pour une soufflante d'air de refroidissement (14), d'un moteur à combustion interne (2), comprenant un boîtier, dans lequel sont disposés une platine destinée à recevoir des composants électroniques ainsi que des éléments conducteurs (22a, 22b ; 22'a, 22'b) pour l'alimentation électrique, une protection thermique (22c, 22'c) étant prévue en tant que protection contre les surchauffes pour l'appareil de commande (16) entre les éléments conducteurs (22a ; 22b ; 22'a, 22'b), **caractérisé en ce que** la protection thermique est réalisée sous forme de pont en étain ou de fil fusible (22c), qui interrompt l'alimentation électrique à l'appareil de commande (16) une fois qu'une température de valeur critique est atteinte et **en ce que** la protection thermique (22c, 22'c) est fixée par soudage, brasage ou sous forme de connexion autodénudante aux éléments conducteurs (22a, 22b ; 22'a, 22'b).
